# EUROPEAN PATENT APPLICATION

(11) **EP 1 993 191 A1**
(43) Date of publication of application: **19.11.2008**
(21) Application number: 07251988.7
(22) Date of filing: 15.05.2007
(51) Int. Cl.: H02K 9/22, H02K 11/00, H02K 5/22, H02K 5/15, H02K 9/19

(54) **Cooling for an electric machine**

(71) Applicant: Emerson Electric Co., St. Louis, MO 63136 (US)
(72) Inventor: Bostwick, Peter K., St Louis, Missouri 63136 (US)
(74) Representative: Hale, Peter

(57) **Abstract**

A motor includes a stator including windings and leads extending from the windings. A rotor is in magnetic coupling relation with the stator and electronic components are electrically connected to the leads. An actively cooled shield separates the electronic components from the rotor and stator. The winding leads are thermally connected with the shield for transferring heat from the winding leads through the shield so that heat transferred from the winding leads to the electronic components is reduced.

## Description

The present invention is generally directed to machines having heat-sensitive electronic components mounted adjacent heat-producing portions of the machine.

In some electric machines, it is necessary to mount heat-sensitive electronics inside or very close to the machine housing. Such heat-sensitive electronics can be damaged by heat produced inside the machine. Prior art insulation and cooling configurations, and even liquid cooling of the machine is inadequate for some machine applications. Accordingly, a better way of protecting the electronics from the heat of the windings is needed.

The invention is defined in the accompanying independent claim. Some preferred features are recited in the dependent claims.

In one disclosed embodiment, a machine comprises a stator including windings and leads extending from the windings. A rotor is in magnetic coupling relation with the stator and electronic components are electrically connected to the leads. An actively cooled shield separates the electronic components from the rotor and stator. The winding leads pass through the shield and are in heat exchange relationship with it. Some heat is therefore transferred from the winding leads to the shield so that the amount of heat transferred from the winding leads to the electronic components is reduced.

In another embodiment, a machine comprises a housing, and the stator and rotor are mounted within the housing. The shield includes holes receiving the winding leads, and a thermally conductive filler is disposed between the winding leads and the shield for transferring heat from the leads to the shield.

In yet another aspect, the machine additionally comprises potting material encasing at least a portion of the windings and a cooling system within the housing for cooling the machine. The shield includes tubes receiving the winding leads. The coolant of the cooling system is in direct contact with the shield so that a temperature of the shield is reduced by the cooling system. The potting material extends up through the tubes and around the winding leads.

Various refinements exist of the features noted in relation to the above-mentioned aspects of the present invention. Further features may also be incorporated in the above-mentioned aspects of the present invention. These refinements and additional features may exist individually or in any combination. For instance, various features discussed below in relation to any of the illustrated embodiments of the present invention may be incorporated into any of the above-described aspects of the present invention, alone or in any combination.

The invention can be put into practice in various ways some of which will now be described with reference to the accompanying drawings in which:
Fig. 1 is a perspective of a motor of one embodiment;
Fig. 2 is another perspective of the motor of Fig. 1 with portions removed for clarity, and Fig. 2A is a similar perspective but with electronic components and a busbar removed;
Fig. 3 is a section view of the motor of Fig. 1 with the components and busbar removed; and
Figs. 4 and 4A are enlarged portions of the section view of Fig. 3, with electronic components being removed in Figure 4A.

In the following, reference will be made to a motor, in particular, an electric motor. However, the invention is applicable to such machines whether configured and/or operated to run as a motor or a generator. Thus, a 'drive end' of a motor is the output end on a generator. Likewise, the drive output of the motor is the driven input shaft of the generator. This will be apparent to the skilled person.

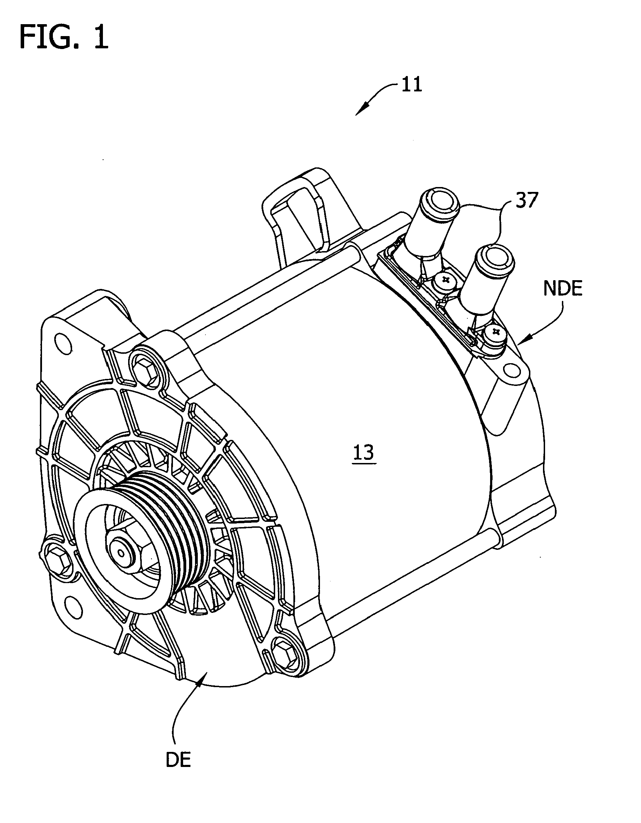

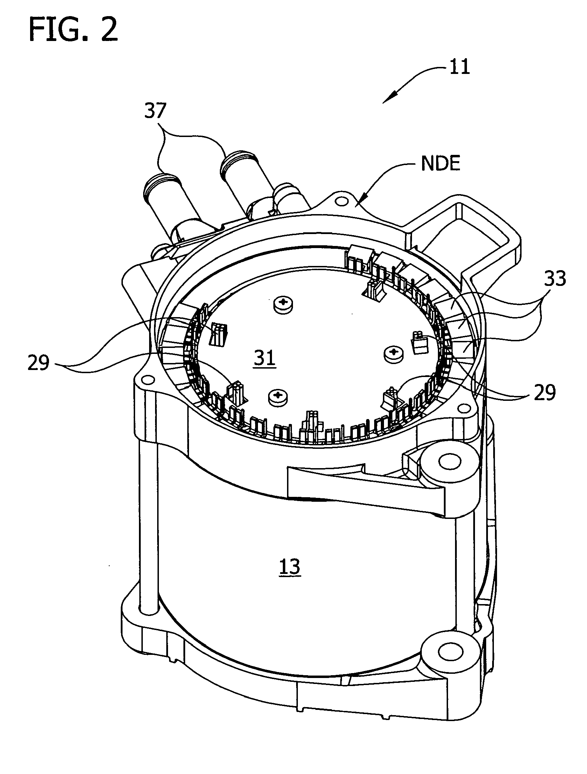

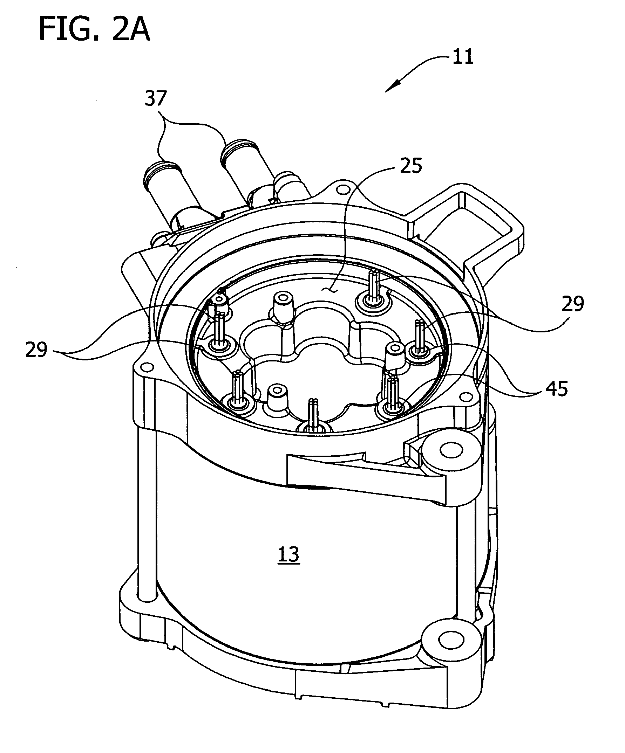

Referring to Figs. 1-3, a motor of one embodiment of the invention is generally designated 11. The motor 11 generally comprises a housing 13, a stator 15 mounted within the housing, and a rotor 17 in magnetic coupling relation with the stator. The configuration of the motor can vary within the scope of the invention.

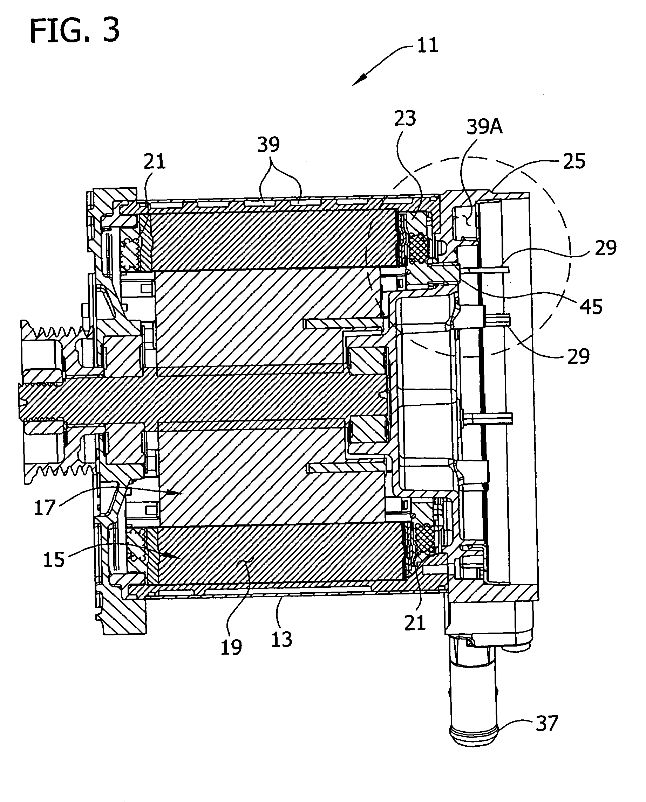

As best shown in Fig. 3, the stator 15 includes teeth 19, and windings 21 of the motor 11 are wound around the teeth of the stator. In this embodiment, potting material 23 encases at least a portion of the windings 21.

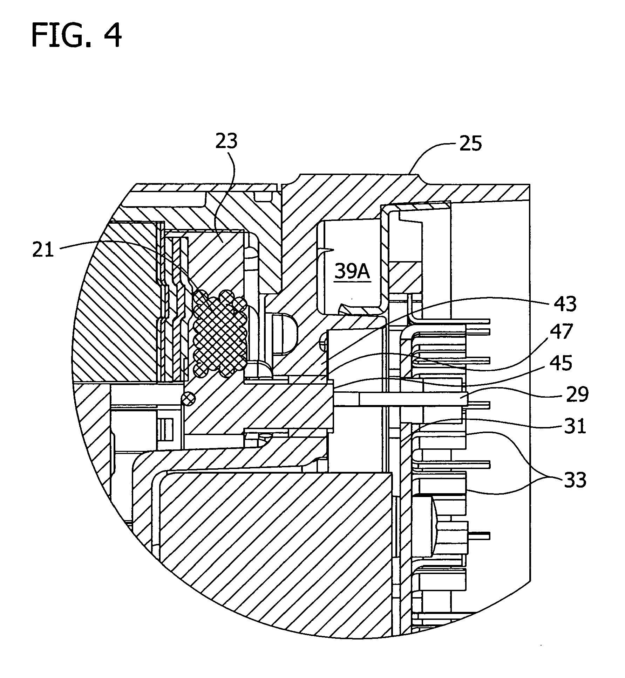

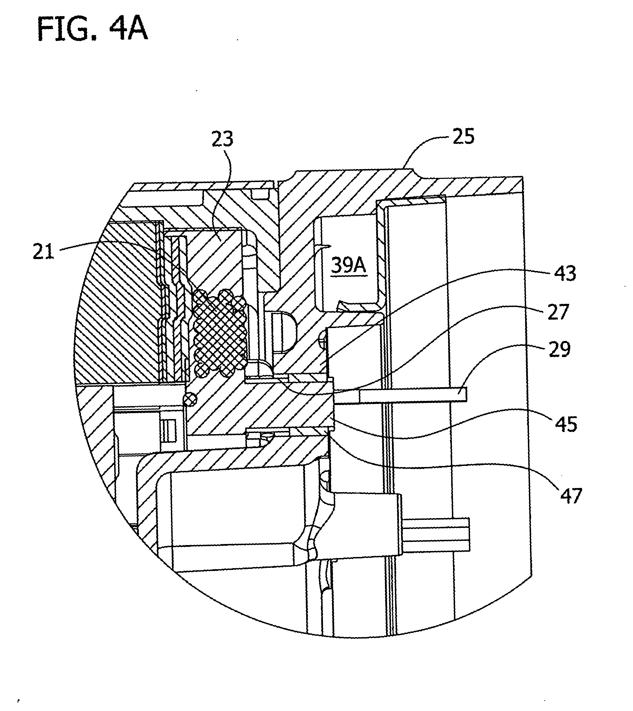

The motor 11 has a drive end (DE) and a non-drive end (NDE). The non-drive end of the motor 11 includes an endshield 25 (more generally, a shield) having a plurality (e.g. 6) of holes 27 (see Fig. 4A) therethrough. Note that other types and configurations of shield are contemplated including shields that are not disposed at an end of the motor.

In this embodiment, winding leads 29 extend from the windings 21 through the holes 27 in the shield 25 and are electrically, mechanically and thermally connected to a busbar 31. Heat tends to be conducted through the winding leads 29 from the windings 21. Electronic components 33 (e.g., capacitors and power components) are disposed on the other side of the endshield 25 from the rotor 17 and stator 15. The heat conducted by the winding leads 29 can damage the electronic components 33.

In this embodiment, the motor 11 includes a cooling system for cooling the motor. The system includes coolant ports 37 fluidly connected to a "cooling jacket" or coolant channels 39 in the motor 11. The coolant flows through a channel 39A in the endshield 25 and through the cooling jacket 39 in the motor housing 13. Thus, the endshield 25 and the cooling jacket 39 are fluidly connected. The direct coolant contact with the endshield 25 helps to cool the shield and the winding leads 29, reducing the amount of heat transmitted to the busbar and thereby protecting the electronic components 33 from heat damage. More generally, the cooling system 35 helps to maintain the electronic components 33 below a maximum acceptable temperature. In one embodiment, the maximum acceptable temperature is about 135°C. A variety of coolants may be suitable, including for example liquid coolant, gas refrigerants, or even high velocity air.

To further reduce the amount of heat transferred from the heat-producing portions (e.g., the windings 21) through the endshield 25, a thermal connection between the winding leads and the shield is provided. Because the endshield 25 is actively cooled, e.g., in this embodiment, the endshield is thermally connected to the coolant, the winding leads 29 are cooled more effectively. Thus, less heat is conducted to the electronic components 33.

In this embodiment and as best shown in Figs. 3-4A, the endshield 25 includes integral tubes 43 including the aforementioned holes 27 that receive the winding leads 29. The tubes 43 increase the surface area for heat transfer between the leads 29 and the endshield 25. The potting material 23 may include a post 45 extending up through the tubes 43 between the leads 29 and the tubes of the endshield 25. The potting material 23 serves to conduct heat from the leads 29 to the endshield 25. In this way, the leads 29 are both electrically insulated from the shield 25 and thermally connected to the endshield. To further conduct heat from the leads 29, a thermally conductive filler 47, such as RTV sealant, may be placed between the potting material 23 and the tube 43 of the shield 25. With this configuration, the endshield 25 is sealed off from the rotor/stator side of the motor 11, helping to provide a sealed, actively cooled cavity for the electronic components 33. Other configurations may be used within the scope of the invention.

In one embodiment, the endshield 25 is cast aluminum, and the potting material 23 is cast epoxy, though other materials and methods of manufacture are contemplated within the scope of the invention. As one exemplary method of forming the potting material 23, the windings 21 are placed around the teeth of the stator 15, and the stator is placed in a mold. The liquid potting material 23 is poured into the mold and allowed to set. It is formed to create the final shape of the potted assembly, including the posts.

As various changes could be made in the above constructions without departing from the scope of the invention, it is intended that all matter contained in the above description or shown in the accompanying drawings shall be interpreted as illustrative and not in a limiting sense. For example, the motor can have a variety of different rotor/stator constructions and a variety of different housings or even no housing separate from the stator. The motor need not include a cooling system, or even be actively cooled within the scope of this invention.

## Claims

1. An electrical machine comprising:
a stator including windings and leads extending from the windings;
electronic components electrically connected to the leads;
an actively cooled shield separating the electronic components from the stator;
wherein the winding leads are in a heat exchange relationship with the shield.

2. A machine as claimed in claim 1, wherein the shield is actively cooled by a cooling system which includes at least one channel for receiving coolant therein, the at least one channel disposed so that the coolant is in direct contact with the shield.

3. A machine as claimed in claim 2, wherein the coolant is a liquid.

4. A machine as claimed in any of claims 1 to 3, wherein the shield includes a plurality of tubes made integral with the shield, the leads extending through the tubes.

5. A machine as claimed in claim 4, further comprising potting material inside the tubes between the leads and the shield.

6. A machine as claimed in any of claims 1 to 5, further comprising thermally conductive filler between the leads and the shield.

7. A machine as claimed in any of claims 1 to 6, further comprising a housing surrounding the stator.

8. A machine as claimed in any of claims 1 to 7, wherein the shield is adapted to house a bearing which rotatably supports a rotor.

9. A machine as claimed in any of claims 1 to 8 wherein potting material encases at least a portion of the windings.

10. A machine as claimed in claim 9 further comprising thermally conductive filler between the potting material and the tubes.
